(19) Europäisches Patentamt
European Patent Office
Office européen des brevets

(11) **EP 3 862 564 B1**

(12) **EUROPEAN PATENT SPECIFICATION**

(45) Date of publication and mention
of the grant of the patent:
**04.01.2023  Bulletin 2023/01**

(21) Application number: **20848778.5**

(22) Date of filing: **30.10.2020**

(51) International Patent Classification (IPC):
***F03D 80/20*** *(2016.01)*

(52) Cooperative Patent Classification (CPC):
**F03D 80/20; F03D 7/0204;** F05B 2270/19;
F05B 2270/329; Y02E 10/72

(86) International application number:
**PCT/CN2020/125135**

(87) International publication number:
**WO 2021/120885 (24.06.2021 Gazette 2021/25)**

(54) **LIGHT AND SHADOW FLICKER CONTROL METHOD FOR WIND TURBINE GENERATOR SYSTEM**

VERFAHREN ZUR STEUERUNG DES SCHATTENWURFS EINER WINDENERGIEANLAGE

PROCÉDÉ DE COMMANDE DE PAPILLOTEMENT DE LUMIÈRE ET D'OMBRE POUR SYSTÈME DE GÉNÉRATEUR ÉOLIEN

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority:  **17.12.2019  CN 201911300326**

(43) Date of publication of application:
**11.08.2021  Bulletin 2021/32**

(73) Proprietor: **XEMC Windpower Co. Ltd.
Hunan 411102 (CN)**

(72) Inventors:
• **PENG, Langjun**
**Xiangtan, Hunan 411102 (CN)**
• **HUANG, Lingxiang**
**Xiangtan, Hunan 411102 (CN)**
• **ZENG, Bing**
**Xiangtan, Hunan 411102 (CN)**
• **TAN, Zheng**
**Xiangtan, Hunan 411102 (CN)**
• **ZHANG, SHuowang**
**Xiangtan, Hunan 411102 (CN)**

(74) Representative: **M. Zardi & Co S.A.
Via G. B. Pioda, 6
6900 Lugano (CH)**

(56) References cited:
WO-A2-2013/017648    CN-A- 101 796 294
CN-A- 105 069 274    CN-A- 105 069 274
CN-A- 105 673 359    CN-A- 110 778 466
CN-B- 103 590 975    JP-A- 2004 360 508
JP-B2- 4 585 151    US-A1- 2019 271 296
US-A1- 2019 271 296    US-A1- 2019 271 296

## Description

### TECHNICAL FIELD

The present disclosure relates to a method for controlling shadow flickers of a wind turbine.

### BACKGROUND

A shadow flicker is a term referring to light and shadow flashing due to the wind turbine blade rotation under the sun. The light and shadow flashing in this way may have a serious impact on residents and farmed animals near the wind turbine. Since there may be adverse effects caused by shadow flickers on human beings, a method for accurately controlling shadow flickers is required to regulate and control the wind turbine in real time, so as to prevent the shadow flickers caused by the wind turbine from impacting sensitive areas. If the light condition is not met at a time t, the yaw-forbidden area is empty, and the sensitive area is not affected by light and shadow. If the light intensity condition is met, and the intersection of a rotor swept area projection area and the sensitive area is empty at the time t, projected area will not be affected by shadow flickers; and if the intersection is not empty, it means that the sensitive area is affected by shadow flickers at that moment.

In order to control the shadow flickers of the wind turbine in real time, it is required to calculate the yaw-prohibited area $\Phi$ which will cause light and shadow influence at the time T. If a current yaw angle Angle_At is not within the yaw-prohibited area $\Phi$, no light and shadow influence exists at the time T. If the previous current yaw angle Angle At is within the yaw-prohibited area $\Phi$, it is determined whether the yaw-allowable area $\xi$ is included in $\Phi$. If $\xi \subseteq \Phi$, the wind turbine should be shut down, and if $\xi$ is not included in $\Phi$, the yaw angle is adjusted to reach a proper value to keep the wind turbine running.

Few researches have been carried out on methods for controlling shadow flickers at home and abroad, and existing patent technologies that have been published include: 1) a method for evaluating light and shadow in a wind farm and device and system for the same, which discloses a method for evaluating a light and shadow range in the wind farm by determining an influence range according to a minimum distance between a relative coordinate point of an object center and a real-time light and shadow influence range, as well as an object range, wherein the influence range is simplified as a circle centered at a projection C of a hub center onto the ground and with a radius r.

US 20190271296A1 discloses a system and method for managing shadow flicker of a wind turbine. It is provided to determine whether the distance between the wind turbine and the receptor is within a shadow range of the receptor based on at the time of day or year and if so, determine whether shadows of the wind turbine are cast in the direction of the receptor based on the spatial location of the wind turbine. Further, the method provides comparing the yaw angle to a predetermined angle range in advance which is predetermined. Additionally, the method provides determining whether shadow flicker is occurring at the receptor based, at least in part, on the sun position, the spatial location of the wind turbine, and the light intensity.

CN 103590975B discloses a system and method for controlling a wind turbine. It is provided to calculate the shadow area based on parameters such as local latitude, local time zone, tower height, blade length, local light information, date and time, the angle between the nacelle and the north direction and the solar altitude angle h, and compare the shadow area with the local residential area to determine whether the yaw motor will be controlled to perform certain avoidance actions such as adjustment of the yaw angle, however the flicker can be reduced by yawing the wind turbine by up to 15° , otherwise the wind turbine is shut down.

JP 4585151B2 discloses a method for controlling a wind turbine. It is provided to calculate the shadow area based on information such as the sun altitude and azimuth, the rotor diameter and the height of the hub, and compare the shadow area with the specific area to determine whether the rotor will be controlled to perform certain avoidance actions such as stop the rotor.

### SUMMARY

In order to solve the above-mentioned technical problems, the present invention provides a method for controlling shadow flickers of a wind turbine according to claim 1. In particular, it is provided a safe and reliable method, which is easy in algorithm, for controlling shadow flickers of a wind turbine.

A method for controlling shadow flickers of a wind turbine is disclosed, including:

in a Step 1, acquiring a current time of a wind farm;
in a Step 2, calculating a yaw-prohibited area that is affected by shadow flickers at the current moment;
in a Step 3, acquiring a current yaw angle of the wind turbine, and calculating a yaw-allowable area according to the yaw angle; and

in a Step 4, determining and selecting measures to avoid the influence of shadow flickers according to the current yaw angle as well as the relationship between the yaw-prohibited area and the yaw-allowable area.

According to the method mentioned above for controlling shadow flickers of the wind turbine, Step 2 is specified as follows:

In a Step 2.1: building a reference coordinate system 0, and proceeding to a Step 2.2;

in Step 2.2: obtaining a yaw rotation centric coordinate point P, a rotor swept area radius R, and a distance R0 from the rotor swept area center to the yaw rotation center, wherein the rotor swept area is a blade surface that a blade sweeps about a rotation center; and proceeding to a Step 2.3;

in Step 2.3: determining whether a sun light exposure intensity i is larger or equal to a light intensity threshold I, and, if so, proceeding to a Step 2.4, or keeping the wind turbine running if not;

in Step 2.4: calculating a sun altitude angle h0 and a sun azimuth angle A at the current time t, and proceeding to a Step 2.5; and

in Step 2.5: calculating the yaw-prohibited area $\Phi$ meeting the light intensity condition.

According to the method mentioned above for controlling shadow flickers of the wind turbine, Step 2.1 is specified as follows:

in a Step 2.1.1: building an X-Y plane in a horizontal plane where the lowest point of the sensitive area $\Psi$ is located, wherein the sensitive area $\Psi$ to be determined is a potential area impacted by shadow flickers; and proceeding to a Step 2.1.2;

in Step 2.1.2: building a Y-Z plane in a south-north vertical plane where a centric point of the sensitive area $\Psi$ is located; and proceeding to a Step 2.1.3;

in Step 2.1.3: building an X-Z plane in an east-west vertical plane where a centric point of the yaw rotation is located; and proceeding to a Step 2.1.4;

in Step 2.1.4: taking an X axis as an intersecting line between the X-Y plane and the X-Z plane, and East as a positive direction; and proceeding to a Step 2.1.5;

in Step 2.1.5: taking a Y axis as an intersecting line between the X-Y plane and the Y-Z plane, and North as a positive direction; and proceeding to a Step 2.1.6;

in Step 2.1.6: taking a Z axis as an intersecting line between the X-Z plane and the Y-Z plane, and a top direction as a positive direction; and proceeding to Step 2.2.

According to the method mentioned above for controlling shadow flickers of the wind turbine, Step 2.5 is specified as follows:

in a Step 2.5.1: initializing $\Phi = \emptyset$, and initializing $S = \emptyset$, wherein S is the intersection of the rotor swept area projection area and the sensitive area; and proceeding to a Step 2.5.2;

in Step 2.5.2: checking through all angles Angle_At' within $[0, 2\pi]$, wherein Angle_At' is a yaw angle between the rotor swept area and the south direction and taking the clockwise direction as the positive direction; and proceeding to a Step 2.5.3;

in Step 2.5.3: assuming the yaw angle as Angle_At', and calculating the space $\Omega t$ at the projection boundary of the rotor swept area impacting the sensitive area as:

$\Omega t = \{(X,Y,Z) | X = R\cos\theta\sin(\text{Angle\_At'}) + R_0\cos(\text{Angle\_At'}) + Dx + (R\sin\theta + Dh - Z)\sin A/\tan(h0), \quad Y = R\cos\theta\cos(\text{Angle\_At'}) - R0\sin(\text{Angle\_At'}) + (R\sin\theta + Dh - Z)\cos A/\tan(h0), \quad Z = Z, \theta \in [0, 2\pi], Z \in [0, r\_h]\};$

wherein $\theta$ represents a calculation angle, Dx represents a coordinate of the yaw rotation center on the X axis, Dh represents a height of the yaw rotation center, r_h represents a height of the sensitive area $\Psi$; and then proceeding to a Step 2.5.4;

in Step 2.5.4: assuming the yaw angle as Angle_At', and checking through all points within the sensitive area, wherein if the point

$(x,y,z) \in \Psi = \{(Xg,Yg,Zg) | Xg \in [-0.5r\_1 \cdot \cos(\text{Angle\_rl}), 0.5r\_1 \cdot \cos(\text{Angle\_rl})], Zg \in [0, r\_h]; Yg = Dy - Xg \cdot \tan(\text{Angle\_rl})\}$ is within the $\Omega t$, S = S U (x,y,z);

wherein Xg is an X axis coordinate component in the sensitive area; Yg is an Y axis coordinate component in the sensitive area; Zg is an Z axis coordinate component in the sensitive area; r_l is a length of the sensitive area $\Psi$; Angle rl is an angle between a direction where the sensitive area $\Psi$ heads to and the east-west direction, and the clockwise direction is taken as the positive direction; Dy is the coordinate of the sensitive area center on the Y axis;

and then proceeding to a Step 2.5.5;

in Step 2.5.5: the yaw-prohibited area $\Phi=\{Angle\_At'|$when the yaw is at $Angle\_At'$, $S \neq \emptyset\}$; and proceeding to a Step 3.

According to the method mentioned above for controlling shadow flickers of the wind turbine, Step 3 is specified as follows:

in a Step 3.1: obtaining an allowable yaw amplitude $Angle\_a$ based on the wind turbine running status, and proceeding to a Step 3.2;
in Step 3.2: the yaw-allowable area $\xi=\{\alpha|\alpha\in[Angle\_At-Angle\_a,Angle\_At+Angle\_a]\}$, and proceeding to a Step 4.

According to the method mentioned above for controlling shadow flickers of the wind turbine, the determination and selection measures to prevent the light and shadow influence in Step 4 are specified as follows:
determining whether the current yaw angle is in the yaw-prohibited area or not, and keeping the wind turbine running if not, or otherwise, if yes, continuing to determine if the yaw-allowable area is included in the yaw-prohibited area and, if so, shutting down the wind turbine, or otherwise, if the yaw-allowable area is incompletely included in the yaw-prohibited area, adjusting the yaw angle to depart from the yaw-prohibited area and keeping the wind turbine running.
The advantages of the present disclosure are: taking into consideration the influence of an actual spatial intersection of a rotor swept area projection area and a sensitive area, the present disclosure selects a reasonable control strategy by calculating the yaw-prohibited area causing the light and shadow influence at the time t, determining a current yaw angle, and a relationship between the yaw-allowable area and the yaw-prohibited area, so as to keep in line with the actual running of the wind turbine.

## BRIEF DESCRIPTION OF THE DRAWINGS

Fig. 1 is a general flowchart of embodiments of the present disclosure.
Fig. 2 is a schematic diagram of a reference coordinate system in the embodiments of the present disclosure.
Fig. 3 is a schematic diagram of a sun altitude angle and a sun azimuth angle in the embodiments of the present disclosure.
Fig. 4 is a detailed flowchart of embodiments of the present disclosure.
Fig. 5 is a solution method flowchart of a yaw-prohibited area in the embodiments of the present disclosure.

## DETAILED DESCRIPTION

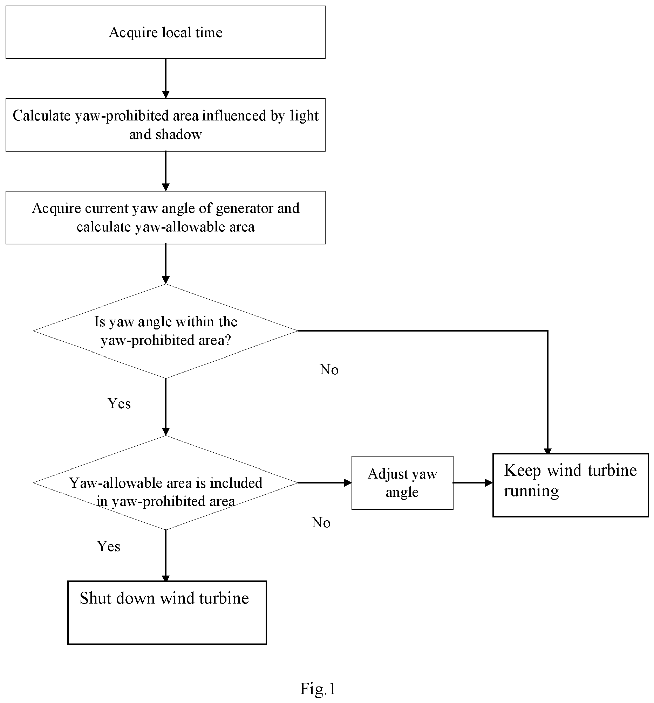

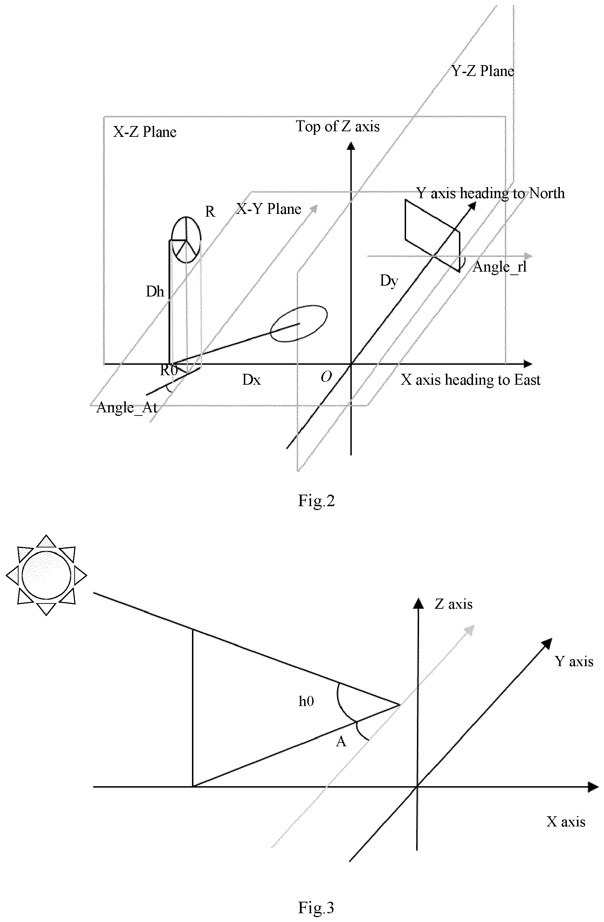

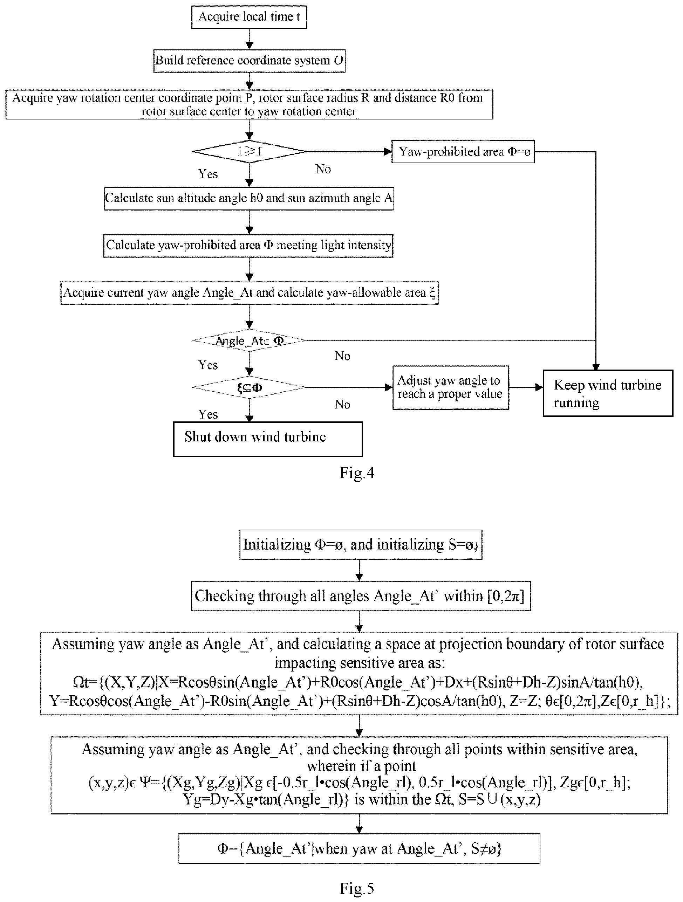

The present disclosure will be further described with reference to figures and embodiments below.
A method is provided for controlling shadow flickers of a wind turbine as show in Figs. 1-5, including:

in a Step 1, acquiring a current time of a wind farm;
in a Step 2, calculating a yaw-prohibited area that is affected by shadow flickers at the current moment. The specific steps are as follows:
in a Step 2.1: building a reference coordinate system 0, and proceeding to a Step 2.2; wherein Step 2.1 is specified as:

in a Step 2.1.1: building an X-Y plane in a horizontal plane where the lowest point of the sensitive area $\Psi$ is located, wherein the sensitive area $\Psi$ to be determined is a potential area impacted by shadow flickers; and proceeding to a Step 2.1.2;
in Step 2.1.2: building a Y-Z plane in a south-north vertical plane where a centric point of the sensitive area $\Psi$ is located; and proceeding to a Step 2.1.3;
in Step 2.1.3: building an X-Z plane in an east-west vertical plane where a centric point of the yaw rotation is located; and proceeding to a Step 2.1.4;
in Step 2.1.4: taking an X axis as an intersecting line between the X-Y plane and the X-Z plane, and East as a positive direction; and proceeding to a Step 2.1.5;
in Step 2.1.5: taking a Y axis as an intersecting line between the X-Y plane and the Y-Z plane, and North as a positive direction; and proceeding to a Step 2.1.6;
in Step 2.1.6: taking a Z axis as an intersecting line between the X-Z plane and the Y-Z plane, and a top direction as a positive direction; and proceeding to Step 2.2;
in Step 2.2: obtaining a yaw rotation centric coordinate point P, a rotor swept area radius R, and a distance R0 from the rotor swept area center to the yaw rotation center, wherein the rotor swept area is a blade surface that a blade sweeps about a rotation center; and proceeding to a Step 2.3;

in Step 2.3: determining whether a sun light exposure intensity i is larger or equal to a light intensity threshold I, and, if so, proceeding to a Step 2.4, or keeping the wind turbine running if not;

in Step 2.4: according to geographical knowledge, calculating a sun altitude angle h0 and a sun azimuth angle A at the current time t, and proceeding to a Step 2.5; and

in Step 2.5: calculating the yaw-prohibited area $\Phi$ meeting the light intensity condition. Step 2.5 is specified as follows:

in a Step 2.5.1: initializing $\Phi = \varnothing$, and initializing $S=\varnothing$, wherein S is the intersection of the rotor swept area projection area and the sensitive area; and proceeding to a Step 2.5.2;

in Step 2.5.2: checking through all angles Angle_At' within $[0,2\pi]$, wherein Angle_At' is a yaw angle between the rotor swept area and the south direction and taking the clockwise direction as the positive direction; and proceeding to a Step 2.5.3;

in Step 2.5.3: assuming the yaw angle as Angle_At', and calculating the space $\Omega t$ at the projection boundary of the rotor swept area impacting the sensitive area as:

$$\Omega t = \{ \qquad ( \qquad X \qquad , \qquad Y \qquad , \qquad Z \qquad )$$

$$|X = R\cos\theta\sin(Angle\_At') + R0\cos(Angle\_At') + Dx + (R\sin\theta + Dh - Z)\sin A / \tan(h0),$$

$$Y = R\cos\theta\cos(Angle\_At') - R0\sin(Angle\_At') + (R\sin\theta + Dh - Z)\cos A / \tan(h0), \quad Z = Z; \quad \theta \epsilon [0,2\pi],$$

$$Z \epsilon [0, r\_h] \} ;$$

wherein $\theta$ represents a calculation angle, Dx represents a coordinate of the yaw rotation center on the X axis, Dh represents a height of the yaw rotation center, r_h represents a height of the sensitive area $\Psi$; and proceeding to a Step 2.5.4;

in Step 2.5.4: assuming the yaw angle as Angle_At', and checking through all points within the sensitive area, wherein if the point

$$(x,y,z) \epsilon \ \Psi = \{(Xg,Yg,Zg) | Xg \ \epsilon [-0.5r\_l \cdot \cos(Angle\_rl), \ 0.5r\_l \cdot \cos(Angle\_rl)], \ Zg \epsilon [0, r\_h];$$

$$Yg = Dy - Xg \cdot \tan(Angle\_rl)\}$$

is within the $\Omega t$, S=S U (x,y,z);

wherein Xg is an X axis coordinate component in the sensitive area; Yg is an Y axis coordinate component in the sensitive area; Zg is an Z axis coordinate component in the sensitive area; r_l is a length of the sensitive area $\Psi$; Angle rl is an angle between a direction where the sensitive area $\Psi$ heads to and the east-west direction, and the clockwise direction is taken as the positive direction; Dy is the coordinate of the sensitive area center on the Y axis; and proceeding to a Step 2.5.5;

in Step 2.5.5: the yaw-prohibited area $\Phi = \{Angle\_At' | $ when the yaw is at Angle_At', $S \neq \varnothing\}$; and proceeding to Step 3.

in a Step 3, acquiring a current yaw angle of the wind turbine, and calculating a yaw-allowable area according to the yaw angle. The specific steps are as follows:

in a Step 3.1: obtaining an allowable yaw amplitude Angle_a based on the wind turbine running status, and proceeding to a Step 3.2;

in Step 3.2: the yaw-allowable area $\xi = \{\alpha | \alpha \in [Angle\_At - Angle\_a, Angle\_At + Angle\_a]\}$, and proceeding to a Step 4.

in Step 4, determining and selecting measures to avoid the influence of shadow flickers according to the current yaw angle as well as the relationship between the yaw-prohibited area and the yaw-allowable area. The determination and selection measures to prevent the light and shadow influence in Step 4 are specified as follows:

Determining whether the current yaw angle is in the yaw-prohibited area or not, and keeping the wind turbine running if not, or otherwise, if yes, continuing to determine if the yaw-allowable area is included in the yaw-prohibited area and, if so, shutting down the wind turbine, or otherwise, if the yaw-allowable area is incompletely included in the yaw-prohibited area, adjusting the yaw angle to depart from the yaw-prohibited area and keeping the wind turbine running.

**Claims**

1. A method for controlling shadow flickers of a wind turbine, comprising:

in a Step 1, acquiring a current time of a wind farm;

in a Step 2, calculating a yaw-prohibited area that is affected by shadow flickers at the current time;

in a Step 3, acquiring a current yaw angle of the wind turbine, and calculating a yaw-allowable area according to the yaw angle; and

in a Step 4, determining and selecting measures to avoid the influence of shadow flickers according to the current yaw angle as well as the relationship between the yaw-prohibited area and the yaw-allowable area, wherein

Step 2 comprises the following steps:

in a Step 2.1: building a reference coordinate system 0, and proceeding to a Step 2.2;

in Step 2.2: obtaining a yaw rotation centric coordinate point P, a rotor swept area radius R, and a distance R0 from the rotor swept area center to the yaw rotation center, wherein the rotor swept area is a blade surface that a blade sweeps about a rotation center; and proceeding to a Step 2.3;

in Step 2.3: determining whether a sun light exposure intensity i is larger or equal to a light intensity threshold I, and, if so, proceeding to a Step 2.4, or keeping the wind turbine running if not;

in Step 2.4: calculating a sun altitude angle h0 and a sun azimuth angle A at the current time t, and proceeding to a Step 2.5; and

in Step 2.5: calculating the yaw-prohibited area $\Phi$ meeting the light intensity condition,

wherein,

Step 2.1 comprises the following steps:

in a Step 2.1.1: building an X-Y plane in a horizontal plane where the lowest point of the sensitive area $\Psi$ is located, wherein the sensitive area $\Psi$ to be determined is a potential area impacted by shadow flickers; and proceeding to a Step 2.1.2;

in Step 2.1.2: building a Y-Z plane in a south-north vertical plane where a centric point of the sensitive area $\Psi$ is located; and proceeding to a Step 2.1.3;

in Step 2.1.3: building an X-Z plane in an east-west vertical plane where a centric point of the yaw rotation is located; and proceeding to a Step 2.1.4;

in Step 2.1.4: taking an X axis as an intersecting line between the X-Y plane and the X-Z plane, and East as a positive direction; and proceeding to a Step 2.1.5;

in Step 2.1.5: taking a Y axis as an intersecting line between the X-Y plane and the Y-Z plane, and North as a positive direction; and proceeding to a Step 2.1.6; and

in Step 2.1.6: taking a Z axis as an intersecting line between the X-Z plane and the Y-Z plane, and a top direction as a positive direction; and proceeding to Step 2.2;

Step 2.5 comprises the following steps:

in a Step 2.5.1: initializing $\Phi$=ø, and initializing S=ø, wherein S is the intersection of the rotor swept area projection area and the sensitive area; and proceeding to a Step 2.5.2;

in Step 2.5.2: checking through all angles Angle_At' within [0,2$\pi$], wherein Angle_At' is a yaw angle between the rotor swept area and the south direction and taking the clockwise direction as the positive direction; and proceeding to a Step 2.5.3;

in Step 2.5.3: assuming the yaw angle as Angle_At', and calculating the space $\Omega$t at the projection boundary of the rotor swept area impacting the sensitive area as:

$$\Omega t=\{(X,Y,Z)|X=R\cos\theta\sin(\text{Angle\_At'})+R0\cos(\text{Angle\_At'})+Dx+(R$$

$$\sin\theta+Dh-Z)\sin A/\tan(h0),$$

$$Y=R\cos\theta\cos(\text{Angle\_At'})-R0\sin(\text{Angle\_At'})+(R\sin\theta+Dh-Z)\cos A/\tan(h0),$$

$$Z=Z,\theta\in[0,2\pi],Z\in[0,r\_h]\};$$

wherein $\theta$ represents a calculation angle, Dx represents a coordinate of the yaw rotation center on the X axis, Dh represents a height of the yaw rotation center, r_h represents a height of the sensitive area $\Psi$; and proceeding to a Step 2.5.4;

in Step 2.5.4: assuming the yaw angle as Angle_At', and checking through all points within the sensitive area, wherein if the point

$$(x,y,z)\in \Psi=\{(Xg,Yg,Zg)|Xg \in[-0.5r\_l \bullet \cos(\text{Angle\_rl}), \quad 0.5r\_l \bullet$$

$$\cos(\text{Angle\_rl})], Zg\in[0,r\_h]; Yg=Dy-Xg\bullet\tan(\text{Angle\_rl})\} \text{ is within the } \Omega t,$$

$$S=S \cup (x,y,z);$$

wherein Xg is an X axis coordinate component in the sensitive area; Yg is an Y axis coordinate component in the sensitive area; Zg is an Z axis coordinate component in the sensitive area; r_l is a length of the sensitive area $\Psi$; Angle rl is an angle between a direction where the sensitive area $\Psi$ heads to and the east-west direction, and the clockwise direction is taken as the positive direction; Dy is the coordinate of the sensitive area center on the Y axis; and proceeding to a Step 2.5.5; and

in Step 2.5.5: the yaw-prohibited area $\Phi=\{$ Angle_At'|when the yaw is at Angle_At', $S\neq\emptyset\}$; and proceeding to Step 3.

2. The method for controlling shadow flickers of the wind turbine according to claim 1, wherein Step 3 includes:

in a Step 3.1: obtaining the allowable yaw amplitude of Angle_a based on the wind turbine running status, and proceeding to a Step 3.2; and

in Step 3.2: the yaw-allowable area $\xi=\{\alpha|\alpha\in[\text{Angle\_At'-Angle\_a,Angle\_At'+Angle\_a}]\}$, and proceeding to Step 4.

3. The method for controlling shadow flickers of the wind turbine according to claim 1, wherein the determination and selection measures to prevent the light and shadow influence in Step 4 include:

determining whether the current yaw angle is in the yaw-prohibited area or not, and keeping the wind turbine running if not, or otherwise, if yes, continuing to determine if the yaw-allowable area is included in the yaw-prohibited area and, if so, shutting down the wind turbine, or otherwise, if the yaw-allowable area is incompletely included in the yaw-prohibited area, adjusting the yaw angle to depart from the yaw-prohibited area and keeping the wind turbine running.

**Patentansprüche**

1. Verfahren zum Steuern von Schattenwürfen einer Windturbine, umfassend:

in einem Schritt 1, Erfassen einer gegenwärtigen Zeit einer Windfarm;
in einem Schritt 2, Berechnen eines für Gieren verbotenen Bereichs, der zur gegenwärtigen Zeit durch Schattenwürfe betroffen ist;
in einem Schritt 3, Erfassen eines gegenwärtigen Gierwinkels der Windturbine, und Berechnen eines für Gieren zulässigen Bereichs gemäß dem Gierwinkel; und

in einem Schritt 4, Bestimmen und Auswählen von Maßnahmen, um den Einfluss von Schattenwürfen zu vermeiden, gemäß dem gegenwärtigen Gierwinkel sowie der Beziehung zwischen dem für Gieren verbotenen Bereich und dem für Gieren zulässigen Bereich, wobei

Schritt 2 die folgenden Schritte umfasst:

in einem Schritt 2.1: Aufbauen eines Referenzkoordinatensystems 0, und Weitergehen zu einem Schritt 2.2;

in Schritt 2.2: Erhalten eines zentrischen Koordinatenpunkts P einer Gierdrehung, eines Radius R eines Rotor-überstrichenen Bereichs, und eines Abstands R0 von einem Zentrum des Rotor-überstrichenen Bereichs zu dem Gierdrehzentrum, wobei der Rotor-überstrichene Bereich eine Blattoberfläche ist, mit der ein Blatt um ein Drehzentrum streicht; und Weitergehen zu einem Schritt 2.3;

in Schritt 2.3: Bestimmen, ob eine Sonnenlichtsexpositionsintensität i größer als ein oder gleich einem Lichtintensitätsschwellenwert I ist, und falls ja, Weitergehen zu einem Schritt 2.4, oder falls nicht, Am-Laufen-Halten der Windturbine;

in Schritt 2.4: Berechnen eines Sonnenhöhenwinkels h0 und eines Sonnenazimutwinkels A zur gegenwärtigen Zeit t, und Weitergehen zu einem Schritt 2.5; und

in Schritt 2.5: Berechnen des für Gieren verbotenen Bereichs Φ, der die Lichtintensitätsbedingung erfüllt, wobei

Schritt 2.1 die folgenden Schritte umfasst:

in einem Schritt 2.1.1: Aufbauen einer X-Y-Ebene in einer horizontalen Ebene, wo sich der niedrigste Punkt des sensitiven Bereichs Ψ befindet, wobei der sensitive Bereich Ψ, der zu bestimmen ist, ein potentieller Bereich ist, der durch Schattenwürfe getroffen wird; und Weitergehen zu einem Schritt 2.1.2;

in Schritt 2.1.2: Aufbauen einer Y-Z-Ebene in einer Süd-Nord-Vertikalebene, wo sich ein zentrischer Punkt des sensitiven Bereichs Ψ befindet; und Weitergehen zu einem Schritt 2.1.3;

in Schritt 2.1.3: Aufbauen einer X-Z-Ebene in einer Ost-West-Vertikalebene, wo sich ein zentrischer Punkt der Gierdrehung befindet; und Weitergehen zu einem Schritt 2.1.4;

in Schritt 2.1.4: Nehmen einer X-Achse als eine Schnittlinie zwischen der X-Y-Ebene und der X-Z-Ebene, und von Osten als eine positive Richtung; und Weitergehen zu einem Schritt 2.1.5;

in Schritt 2.1.5: Nehmen einer Y-Achse als eine Schnittlinie zwischen der X-Y-Ebene und der Y-Z-Ebene, und von Norden als eine positive Richtung; und Weitergehen zu einem Schritt 2.1.6; und

in Schritt 2.1.6: Nehmen einer Z-Achse als eine Schnittlinie zwischen der X-Z-Ebene und der Y-Z-Ebene, und einer Aufwärtsrichtung als eine positive Richtung; und Weitergehen zu Schritt 2.2;

Schritt 2.5 die folgenden Schritte umfasst:

in einem Schritt 2.5.1: Initialisieren von Φ=ø, und Initialisieren von S=ø, wobei S die Überschneidung des Projektionsbereichs des Rotor-überstrichenen Bereichs und des sensitiven Bereichs ist; und Weitergehen zu einem Schritt 2.5.2;

in Schritt 2.5.2: Überprüfen durch alle Winkel von Winkel_At' innerhalb $[0,2\pi]$, wobei Winkel_At' ein Gierwinkel zwischen dem Rotor-überstrichenen Bereich und der Südrichtung ist, und Nehmen der Uhrzeigerrichtung als die positive Richtung; und Weitergehen zu einem Schritt 2.5.3;

in Schritt 2.5.3: Annehmen des Gierwinkels als Winkel_At', und Berechnen des Raums $\Omega t$ an der Projektionsgrenze des Rotor-überstrichenen Bereichs, der auf den sensitiven Bereich trifft, als:

$$\Omega t=\{(X,Y,Z)|X=R\cos\theta\sin(\text{Winkel\_At'})+R0\cos(\text{Winkel\_At'})+Dx+(R\sin\theta+Dh-Z)\sin A/\tan(h0),$$

$$Y=R\cos\theta\cos(\text{Winkel\_At'})-R0\sin(\text{Winkel\_At'})+(R\sin\theta+Dh-Z)\cos A/\tan(h0),$$

$$Z=Z,\theta\epsilon[0,2\pi],Z\epsilon[0,r\_h]\};$$

wobei $\theta$ einen Berechnungswinkel repräsentiert, Dx eine Koordinate des Gierdrehzentrums an der X-Achse repräsentiert, Dh eine Höhe des Gierdrehzentrums repräsentiert, r_h eine Höhe des sensitiven Bereichs Ψ repräsentiert; und Weitergehen zu einem Schritt 2.5.4;
in Schritt 2.5.4: Annehmen des Gierwinkels als Winkel_At', und Überprüfen durch alle Punkte innerhalb des sensitiven Bereichs, wobei, falls der Punkt

$$(x,y,z)\in \Psi=\{(Xg,Yg,Zg)|Xg \in[-0.5r\_l\bullet\cos(Winkel\_rl), 0.5r\_l\bullet$$

$$\cos(Winkel\_rl)], Zg\in[0,r\_h]; Yg=Dy-Xg\bullet\tan(Winkel\_rl)\} \text{ innerhalb des } \Omega t \text{ ist,}$$

$$S=S\cup(x,y,z);$$

wobei Xg eine X-Achsenkoordinatenkomponente in dem sensitiven Bereich ist; Yg eine Y-Achsenkoordinatenkomponente in dem sensitiven Bereich ist; Zg eine Z-Achsenkoordinatenkomponente in dem sensitiven Bereich ist; r_l eine Länge des sensitiven Bereichs Ψ ist; Winkel_rl ein Winkel zwischen einer Richtung, auf die der sensitive Bereich Ψ zusteuert, und der Ost-West-Richtung ist, und die Uhrzeigerrichtung als die positive Richtung genommen wird; Dy die Koordinate des Zentrums des sensitiven Bereichs an der Y-Achse ist; und Weitergehen zu einem Schritt 2.5.5; und
in Schritt 2.5.5: der für Gieren verbotene Bereich Φ={ Winkel_At'|wenn das Gieren bei Winkel_At' ist, S≠ø}; und Weitergehen zu Schritt 3.

2. Verfahren zum Steuern von Schattenwürfen der Windturbine nach Anspruch 1, wobei Schritt 3 umfasst:

in einem Schritt 3.1: Erhalten der zulässigen Gieramplitude von Winkel a basierend auf einem Laufstatus der Windturbine, und Weitergehen zu einem Schritt 3.2; und
in Schritt 3.2: der für Gieren zulässige Bereich

$$\xi=\{\alpha|\alpha\in[Winkel\_At'-Winkel\_a,Winkel\_At'+Winkel\_a]\},$$

und Weitergehen zu Schritt 4.

3. Verfahren zum Steuern von Schattenwürfen der Windturbine nach Anspruch 1, wobei die Bestimmungs- und Auswahlmaßnahmen, um einen Einfluss von Licht und Schatten in Schritt 4 zu verhindern, umfassen:
Bestimmen ob der gegenwärtige Gierwinkel in dem für Gieren verbotenen Bereich ist oder nicht, und Am-Laufen-Halten der Windturbine, falls nicht, oder andernfalls, falls ja, Fortsetzen, zu bestimmen, ob der für Gieren zulässige Bereich in dem für Gieren verbotenen Bereich eingeschlossen ist, und, falls ja, Abschalten der Windturbine, oder andernfalls, falls der für Gieren zulässige Bereich nicht vollständig in dem für Gieren verbotenen Bereich eingeschlossen ist, Anpassen des Gierwinkels, um von dem für Gieren verbotenen Bereich abzuweichen, und Am-Laufen-Halten der Windturbine.

**Revendications**

1. Procédé pour contrôler les battements d'ombre d'une éolienne, comprenant :

dans une étape 1, l'acquisition d'un temps actuel d'un parc éolien ;
dans une étape 2, le calcul d'une zone de lacet interdit qui est affectée par des battements d'ombre au temps actuel ;
dans une étape 3, l'acquisition d'un angle de lacet actuel de l'éolienne, et le calcul d'une zone de lacet autorisé en fonction de l'angle de lacet ; et
dans une étape 4, la détermination et la sélection de mesures pour éviter l'influence des battements d'ombre en fonction de l'angle de lacet actuel ainsi que la relation entre la zone de lacet interdit et la zone de lacet autorisé, dans lequel
l'étape 2 comprend les étapes suivantes :

dans une étape 2.1 : la construction d'un système de coordonnées de référence 0, et la poursuite vers une étape 2.2 ;

dans l'étape 2.2: l'obtention d'un point de coordonnée centrique de rotation de lacet P, d'un rayon de zone balayée de rotor R, et d'une distance R0 à partir du centre de zone balayée de rotor jusqu'au centre de rotation de lacet, dans lequel la zone balayée de rotor est une surface de pale où une pale est balayée autour d'un centre de rotation ; et la poursuite vers une étape 2.3 ;

dans l'étape 2.3 : la détermination si oui ou non une intensité d'exposition de lumière solaire i est supérieure ou égale à un seuil d'intensité lumineuse I, et, si tel est le cas, la poursuite vers une étape 2.4, ou le maintien du fonctionnement d'éolienne si non ;

dans l'étape 2.4 : le calcul d'un angle d'altitude de soleil h0 et d'un angle d'azimut de soleil A au temps actuel t, et la poursuite vers une étape 2.5 ; et

dans l'étape 2.5 : le calcul de la zone de lacet interdit Φ qui répond à la condition d'intensité lumineuse, dans lequel,

l'étape 2.1 comprend les étapes suivantes :

dans une étape 2.1.1 : la construction d'un plan X-Y dans un plan horizontal où le point le plus bas de la zone sensible Ψ est situé, dans lequel la zone sensible Ψ à déterminer est une zone potentielle impactée par des battements d'ombre ; et la poursuite vers une étape 2.1.2 ;

dans l'étape 2.1.2 : la construction d'un plan Y-Z dans un plan vertical Sud-Nord où un point centrique de la zone sensible Ψ est situé ; et la poursuite vers une étape 2.1.3 ;

dans l'étape 2.1.3 : la construction d'un plan X-Z dans un plan vertical Est-Ouest où un point centrique de la rotation de lacet est situé ; et la poursuite vers une étape 2.1.4 ;

dans l'étape 2.1.4 : la considération d'un axe X comme ligne d'intersection entre le plan X-Y plane et le plan X-Z, et l'est comme direction positive, et la poursuite vers une étape 2.1.5 ;

dans l'étape 2.1.5 : la considération d'un axe Y comme ligne d'intersection entre le plan X-Y et le plan Y-Z, et le Nord comme direction positive ; et la poursuite vers une étape 2.1.6 ; et

dans l'étape 2.1.6 : la considération d'un axe Z comme ligne d'intersection entre le plan X-Z et le plan Y-Z, et une direction supérieure comme direction positive ; et la poursuite vers l'étape 2.2 ;

l'étape 2.5 comprend les étapes suivantes :

dans une étape 2.5.1 : l'initialisation de Φ=Ø, et l'initialisation de S=Ø, où S est l'intersection de la zone de projection de zone balayée de rotor et la zone sensible ; et la poursuite vers une étape 2.5.2 ;

dans l'étape 2.5.2 : la vérification de tous les angles Angle_At' à l'intérieur de $[0,2\pi]$, où Angle_At' est un angle de lacet entre la zone balayée de rotor et la direction Sud et la considération de la direction dans le sens des aiguilles d'une montre comme direction positive ; et la poursuite vers une étape 2.5.3 ;

dans l'étape 2.5.3 : la supposition de l'angle de lacet comme Angle_At', et le calcul de l'espace Qt au niveau de la frontière de projection de la zone balayée de rotor impactant la zone sensible comme :

$$\Omega t = \{(X,Y,Z) \mid X = R\cos\theta\sin(Angle\_At') + R0\cos(Angle\_At') + Dx + (R\sin\theta + Dh - Z)\sin A / \tan(h0),$$

$$Y = R\cos\theta\cos(Angle\_At') - R0\sin(Angle\_At') + (R\sin\theta + Dh - Z)\cos A / \tan(h0),$$

$$Z = Z, \theta \in [0, 2\Pi], Z \in [0, r\_h]\} ;$$

où θ représente un angle de calcul, Dx représente une coordonnée du centre de rotation de lacet sur l'axe X, Dh représente une hauteur du centre de rotation de lacet, r_h représente une hauteur de la zone sensible Ψ ; et la poursuite vers une étape 2.5.4 ;

dans l'étape 2.5.4 : la supposition de l'angle de lacet comme Angle_At', et la vérification de tous les points à l'intérieur de la zone sensible, dans lequel si le point $(x,y,z) \in \Psi = \{(Xg,Yg,Zg) \mid Xg \in [-0,5r\_l \cdot \cos(Angle\_rl), 0,5r\_l \cdot \cos(Angle\_rl)], Zg \in [0,r\_h]; Yg = Dy - Xg \cdot \tan(Angle\_rl)\}$ est compris dans le Qt, S=SU(x,y,z) ;

où Xg est une composante de coordonnée de l'axe X dans la zone sensible ; Yg est une composante de coordonnée de l'axe Y dans la zone sensible ; Zg est une composante de coordonnée de l'axe Z dans la zone sensible ; r_l est une longueur de la zone sensible $\Psi$ ; Angle_rl est un angle entre une direction où la zone sensible $\Psi$ se dirige et la direction Est-Ouest, et la direction dans le sens des aiguilles d'une montre est considérée comme direction positive ; Dy est la coordonnée du centre de zone sensible sur l'axe Y ; et la poursuite vers l'étape 2.5.5 ; et

dans l'étape 2.5.5 : la zone de lacet interdit $\Phi$={Angle_At'| lorsque le lacet est au niveau de Angle_At', S$\neq\emptyset$} ; et la poursuite vers l'étape 3.

2. Procédé de commande de battements d'ombre d'une éolienne selon la revendication 1, dans lequel l'étape 3 comporte :

dans une étape 3.1 : l'obtention de l'amplitude de lacet autorisée de Angle_a sur la base de l'état de fonctionnement de l'éolienne, et la poursuite vers une étape 3.2 ; et
dans l'étape 3.2 : la zone de lacet autorisé $\xi$={$\alpha|\alpha\in$ [Angle_At'-Angle_a,Angle_At'+Angle_a]}, et la poursuite vers l'étape 4.

3. Procédé de commande de battements d'ombre d'une éolienne selon la revendication 1, dans lequel les mesures de détermination et de sélection pour empêcher l'influence de lumière et d'ombre dans l'étape 4 comportent :
la détermination si l'angle de lacet actuel est dans la zone de lacet interdit ou non, et le maintien de l'éolienne en fonctionnement s'il ne l'est pas, ou sinon, s'il y est, la poursuite pour déterminer si la zone de lacet autorisé est incluse dans la zone de lacet interdit et, si tel est le cas, l'arrêt de l'éolienne, ou sinon, si la zone de lacet autorisé est incluse de manière incomplète dans la zone de lacet interdit, l'ajustement de l'angle de lacet pour partir de la zone de lacet interdit et le maintien du fonctionnement de l'éolienne.

Acquire local time

↓

Calculate yaw-prohibited area influenced by light and shadow

↓

Acquire current yaw angle of generator and calculate yaw-allowable area

↓

Is yaw angle within the yaw-prohibited area? — No → Keep wind turbine running

Yes ↓

Yaw-allowable area is included in yaw-prohibited area — No → Adjust yaw angle → Keep wind turbine running

Yes ↓

Shut down wind turbine

Fig.1

Y-Z Plane

X-Z Plane

Top of Z axis

R    X-Y Plane

Y axis heading to North

Dh

Dy

Angle_rl

R0

Dx    O

X axis heading to East

Angle_At

Fig.2

Z axis

Y axis

h0

A

X axis

Fig.3

Acquire local time t

Build reference coordinate system $O$

Acquire yaw rotation center coordinate point P, rotor surface radius R and distance R0 from rotor surface center to yaw rotation center

$i \geq I$

Yes — No

Yaw-prohibited area $\Phi=\emptyset$

Calculate sun altitude angle h0 and sun azimuth angle A

Calculate yaw-prohibited area $\Phi$ meeting light intensity

Acquire current yaw angle Angle_At and calculate yaw-allowable area $\xi$

Angle_At$\in \Phi$

Yes — No

$\xi \subseteq \Phi$

Yes — No

Adjust yaw angle to reach a proper value

Keep wind turbine running

Shut down wind turbine

Fig.4

Initializing $\Phi=\emptyset$, and initializing S=$\emptyset$

Checking through all angles Angle_At' within [0,2π]

Assuming yaw angle as Angle_At', and calculating a space at projection boundary of rotor surface impacting sensitive area as:
$\Omega t = \{(X,Y,Z)|X=R\cos\theta\sin(Angle\_At')+R0\cos(Angle\_At')+Dx+(R\sin\theta+Dh-Z)\sin A/\tan(h0),$
$Y=R\cos\theta\cos(Angle\_At')-R0\sin(Angle\_At')+(R\sin\theta+Dh-Z)\cos A/\tan(h0), Z=Z; \theta\in[0,2\pi],Z\in[0,r\_h]\};$

Assuming yaw angle as Angle_At', and checking through all points within sensitive area, wherein if a point
$(x,y,z)\in \Psi=\{(Xg,Yg,Zg)|Xg \in[-0.5r\_l \cdot \cos(Angle\_rl), 0.5r\_l \cdot \cos(Angle\_rl)], Zg\in[0,r\_h];$
$Yg=Dy-Xg \cdot \tan(Angle\_rl)\}$ is within the $\Omega t$, S=S $\cup$ (x,y,z)

$\Phi=\{Angle\_At'|when yaw at Angle\_At', S\neq\emptyset\}$

Fig.5

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20190271296 A1
- CN 103590975 B
- JP 4585151 B